(19) Europäisches Patentamt
European Patent Office
Office européen des brevets

(11) **EP 1 619 846 B1**

(12) **EUROPEAN PATENT SPECIFICATION**

(45) Date of publication and mention
of the grant of the patent:
**14.11.2007 Bulletin 2007/46**

(51) Int Cl.:
*H04L 27/26* (2006.01)  *H04L 27/227* (2006.01)

(21) Application number: **05015997.9**

(22) Date of filing: **22.07.2005**

(54) **Method for estimating the frequency offset in a communication system over a Rayleigh fading channel**

Verfahren zum Schätzen des Frequenzversatzes in einem Kommunikationssystem über einen Rayleigh-Fading-Kanal

Procédé d'estimation de la fréquence de décalage dans un système de communication sur un canal sujet à l'évanouissement de Rayleigh

(84) Designated Contracting States:
**DE FI FR GB IT SE**

(30) Priority: **22.07.2004 KR 2004057285**

(43) Date of publication of application:
**25.01.2006 Bulletin 2006/04**

(73) Proprietors:
• **SAMSUNG ELECTRONICS CO., LTD.**
**Suwon-si,**
**Gyeonggi-do (KR)**
• **Korea Advanced Institute of Science and Technology**
**(KAIST)**
**Daejon (KR)**

(72) Inventors:
• **Jung, Young-Ho**
**Yeongtong-gu,**
**Suwon-si,**
**Gyeonggi-do (KR)**
• **Chung, Jae-Hak**
**Yeongtong-gu,**
**Suwon-si,**
**Gyeonggi-do (KR)**
• **Kim, Jae-Yeol**
**Gunpo-si,**
**Gyeonggi-do (KR)**
• **Yun, Jae-Yeun**
**Bucheon-si,**
**Gyeonggi-do (KR)**
• **Kim, Young-Uhk**
**Daejeon (KR)**

• **Lee, Yong-Hoon**
**Yuseong-gu,**
**Daejeon (KR)**
• **Shin, Won-Yong**
**Yongin-si,**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**US-A1- 2004 087 313**

• **YI MA ET AL: "Combined Channel Estimator for Pilot-Assisted Wireless OFDM Communication Systems" VEHICULAR TECHNOLOGY CONFERENCE, 2004. VTC 2004-SPRING. 2004 IEEE 59TH MILAN, ITALY 17-19 MAY 2004, PISCATAWAY, NJ, USA,IEEE, US, vol. 4, 17 May 2004 (2004-05-17), pages 1888-1891, XP010766489 ISBN: 0-7803-8255-2**
• **BORAH ET AL: "Frequency-selective fading channel estimation with a polynomial time-varying channel model" IEEE TRANSACTIONS ON COMMUNICATIONS, vol. 47, no. 6, 1 June 1999 (1999-06-01), pages 862-873, XP002351428**

- XIAOWEN WANG ET AL: "OFDM channel estimation based on time-frequency polynomial model of fading multipath channel" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY : IEEE, US, vol. VOL. 1 OF 4. CONF. 54, 7 October 2001 (2001-10-07), pages 460-464, XP010562728 ISBN: 0-7803-7005-8

**Description**

The present invention relates to a frequency offset estimation method in a mobile communication system, and more particularly to a method for estimating a frequency offset in a fast Rayleigh fading channel environment in a communication system using an orthogonal frequency division multiplexing (OFDM) scheme.

Many studies are being conducted related to the user of an Orthogonal Frequency Division Multiplexing (OFDM) scheme for high-speed data transmission over wired/wireless channels in a mobile communication system after the 3G (3rd Generation) mobile communication system. Herein, the OFDM scheme, which transmits data using multiple carriers, is a special type of a Multiple Carrier Modulation (MCM) scheme in which a serial symbol sequence is converted into parallel symbol sequences and the parallel symbol sequences are modulated with a plurality of mutually orthogonal subcarriers (or subcarrier channels) before being transmitted.

Currently an OFDM-based communication system of providing transmission rate and mobility higher than those of the conventional system has been actively investigated. For instance, the Institute of Electrical and Electronics Engineers (IEEE) 802.16 and the IEEE 802. 20, which are standards for the OFDM, are aimed at data transmission speeds of several tens of Mbytes per second at maximum in vehicle movement and at mobile speeds of more than 250 km/h.

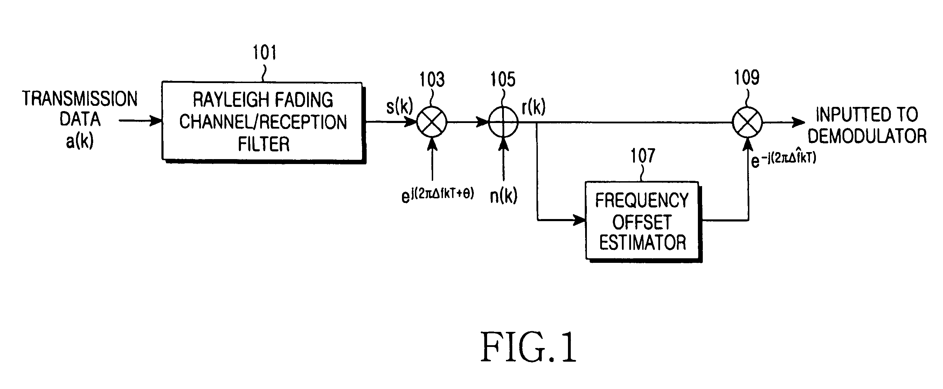

A frequency offset occurs due to the difference of oscillator frequencies of a transmitter and a receiver in a communication system. When the frequency offset remains in the receiver, the receiver cannot precisely detect signals. Mobile communication systems must inevitably process signals that are affected by the frequency offset. Estimation and elimination of the frequency offset will be described with reference to FIG. 1.

FIG. 1 is a block diagram illustrating a general frequency offset estimation process in a communication system. Before a description about FIG. 1 is given, a frequency offset estimation in the OFDM environment will be briefly described. In the aforementioned OFDM modulation scheme, since data is simultaneously transmitted through a plurality of carriers having overlapping spectrums, the OFDM modulation scheme is very sensitive to a frequency offset. In other words, when a receiver does not exactly estimate the frequency of the carrier in demodulating a bandpass signal into a baseband signal, inter-channel interference (ICI), denoting the introduction of the signal of an adjacent channel, occurs. The performance of a system is then greatly deteriorated.

A scheme for estimating a frequency offset of the OFDM signal may be classified into an estimation method on a time domain and an estimation method on a frequency domain. According to a basic principle of the two methods, training signals equal to each other or training signals associated with each other are repeatedly transmitted, any phase change between the corresponding signals is calculated, and a frequency offset is estimated. The estimation method on the time domain may use a guard interval obtained by copying a portion of a symbol. Further, the methods on each domain include a coarse estimation having an estimation range greater than an integer multiple of a sub-carrier interval, and a fine estimation having an estimation range of less than the sub-carrier interval.

The time domain method estimates an offset from a signal before a discrete Fourier transform (DFT) and corrects for the offset from a corresponding symbol used in the offset estimation or a symbol after the corresponding symbol. Further, the time domain method may apply the same algorithm to the coarse estimation having the estimation range greater than an integer multiple of the sub-carrier interval and the fine estimation. The coarse estimation method on the time domain has an estimation range determined by the number of training signals repeated in one OFDM symbol. That is, a training signal repeated L times in a useful period of an OFDM symbol may be subjected to the coarse estimation within a period of ±L/2 of the sub-carrier interval. Herein, when a repetition period is reduced below a guard interval due to the influence of a channel, an estimated error increases. In general, since a training signal for a frequency offset estimation is also used in a channel estimation, a minimum period of a short symbol is limited to a guard interval.

The frequency domain method separately applies the coarse estimation and the fine estimation. The fine estimation uses the property of a repeated training signal in a manner similar to the time domain method. The coarse estimation generally uses a correlation value of a DFT output. Further, an OFDM system using an Nth-order fast fourier transform (FFT) can estimate a frequency offset in an entire interval, that is, within a period of ±L/2 of the sub-carrier interval. However, since a correlation value must be calculated through the movement to each sample interval for the coarse estimation, the amount of calculation largely increases. Further, the coarse estimation method on the frequency domain simultaneously performed with the fine estimation has a disadvantage in that the performance of an offset estimation algorithm is influenced by the size of an offset. For instance, a normalized relative frequency offset of 1.0 for a sub-carrier interval has a higher probability of an erroneous coarse estimation than a normalized relative frequency offset of 1.4. This is because a correlation value decreases and interference signal order increases due to the ICI as the offset diverges farther from an integer multiple of the sub-carrier interval. However, the coarse estimation method on the time domain estimates a decimal portion without being influenced by the ICI. Accordingly, when the fine estimation is performed after the coarse estimation, the estimation is only performed below a possible range of the fine estimation. Therefore, the probability at which the coarse estimation is erroneously performed is significantly reduced.

As described above, in the coarse estimation for a frequency offset, the frequency domain estimation method has characteristics in which an estimation range is wide but the amount of the calculation is large, and the estimation error probability is high when the coarse estimation is applied before the fine estimation or simultaneously applied with the fine estimation. In contrast, the time domain estimation method has characteristics in which the amount of the calculation is small but an estimation range is limited.

Referring to FIG. 1, transmission data a(k) passes through a Rayleigh fading channel and reception filter 101 and is converted to a complex number signal s(k). When the frequency of a transmitter is different by a factor of $\Delta f$, a frequency offset can be modeled by a process through which a first multiplier 103 outputs a value obtained by multiplying the s(k) by $e^{j(2\pi\Delta fnT+\theta)}$. An adder 105 inputs the signal output from the first multiplier 103, adds the signal to an interference/noise signal n(k), and outputs a final baseband reception signal r(k). A frequency offset estimator 107 inputs the signal r(k), estimates a frequency offset, and outputs a frequency offset compensation value $e^{-j(2\pi\Delta\Delta fkT+\theta)}$. A second multiplier 109 adjusts the reception signal by compensating for the frequency offset on the basis of the estimated value received from the frequency offset estimator 107, and outputs the adjusted reception signal to a demodulator.

Herein, k denotes a time index of a sample, $\Delta f$ denotes a frequency offset value, T denotes a sample length, $\Delta \hat{} f$ denotes a frequency offset estimation value, a(k) denotes a transmission signal, $\theta$ denotes a phase offset, and n(k) denotes an interference/noise signal.

The example shown in FIG. 1 is presented on the assumption that the estimation and the elimination of the frequency offset are performed on a time domain. Further, the example may include a scheme using a training sequence and a blind scheme. It is noted that the scheme using the training sequence will be described in detail. The training sequence includes at least one OFDM symbol. As the transmission rate increases, the estimation of a frequency offset is more important for both a time division multiple access (TDMA) scheme and the OFDM scheme. In particular, when an OFDM system is employed for ensuring a high transmission rate, a frequency offset has an influence on orthogonality of each sub-carrier and may cause interference between the sub-carriers. Accordingly, it is necessary to provide an estimation with a very high accuracy.

As the mobility increases, each movable body suffers a fast fading channel in which the channel greatly changes over time. From such a channel characteristic, the channel is regarded to be variable and not to have a fixed value during the data transmission interval. Accordingly, the conventional frequency offset estimation scheme applied for a fixed channel characteristic cannot obtain the proper estimation performance within various ranges of speed of a movable body.

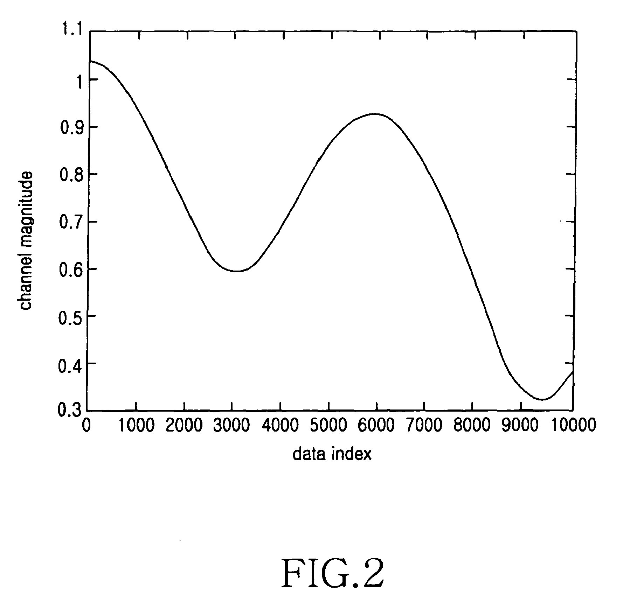

A fast Rayleigh fading channel will be described with reference to FIG. 2.

FIG. 2 is a graph showing a general example of the fast Rayleigh fading channel.

FIG. 2 shows a typical example of a fading channel. In FIG. 2, according to the data transmission, an index (time) of data is expressed on an x axis and an absolute value of a channel through which the data is transmitted is expressed on a y axis. A fast fading denotes a case in which fading sufficiently occurs in a data transmission interval and thus a channel value significantly changes in the data transmission interval. A fading channel is regarded as a time-invariant channel in a predetermined interval. That is, when the predetermined interval occupies only a short index interval in FIG 2, the fading channel is referred to as the time-invariant channel. Further, when the predetermined interval is significantly greater than the short index interval, the fading channel must be modeled by means of a fast fading channel. In general, since a communication system channel has L multiple paths, there exist L channels which are random and suffer change as shown in FIG. 2.

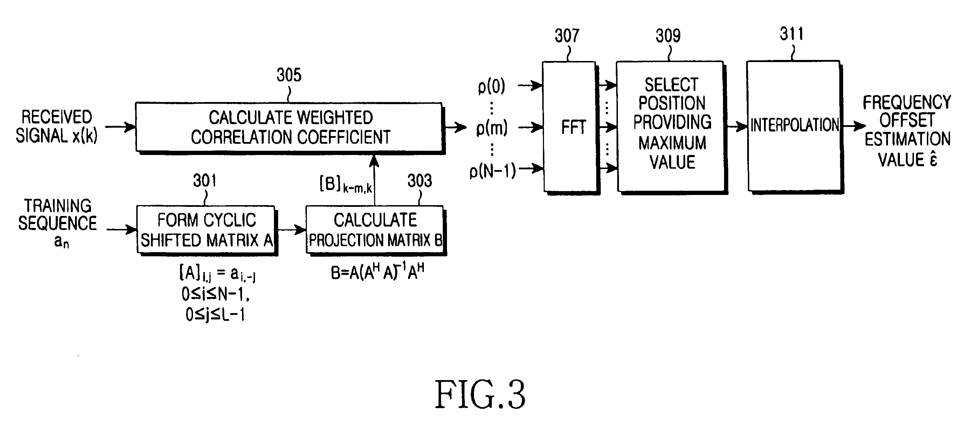

Meanwhile, the prior art provides an optimal channel estimation value and an optimal frequency offset estimation value in a view of a maximum likelihood for a case employing a training sequence promised in advance between a transmitter and a receiver. A maximum likelihood estimator according to the prior art will be described with reference to FIG. 3.

FIG. 3 illustrates a construction of the maximum likelihood estimator according to the prior art. Referring to FIG. 3, the maximum likelihood estimator inputs a training sequence $a_n$. Then, in block 301, a cyclic shifted matrix A is formed from the input training sequence $a_n$. In block 303, a projection matrix B is calculated from the matrix A. Herein, a $(k-m, k)^{th}$ element of the projection matrix B is used in calculating a weighted correlation coefficient of data in block 305.

The weighted correlation coefficient calculated in block 305 is subjected to an FFT in block 307 so as to calculate values on a frequency domain. In block 309, a position providing the largest value from among the calculated values is selected. A frequency value at the selected position exactly equals the estimated value of a frequency offset. As a window size of an FFT increases, a value near to a frequency offset of an exact position can be estimated, and interpolation is used for more exact estimation in block 311.

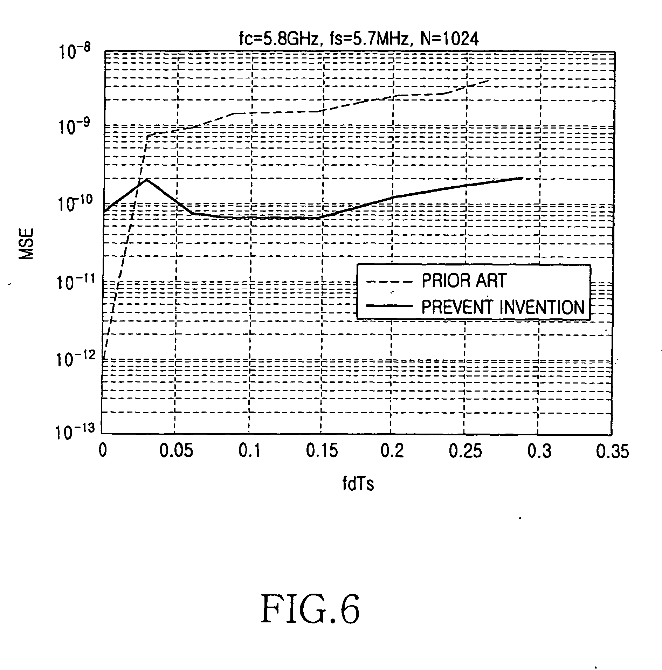

According to the prior art, a channel is regarded as a fixed value. Accordingly, when a movable body actually moves, it is difficult to apply the prior art. The aforementioned study in the prior art shows high estimation performance when a movable body is in a still state or moves at a very low speed. As shown in FIG. 6 which will be described later, the study in the prior art shows rapid reduction of estimation performance when the speed of the movable body increases.

Further, another study into the frequency offset estimation as described above includes a consideration of the speed change of a movable body which has not been considered in the prior art.

However, the study estimates a frequency offset through a blind scheme by means of a cyclic prefix (CP) provided in each OFDM symbol, without using a separate training sequence in order to utilize the characteristics of the OFDM system. Since this deviates from the scope of the present invention using a training sequence, a detailed description will be omitted.

A frequency offset estimation using the CP as described above does not provide high estimation performance due to relatively short length of the CP. Therefore, a scheme of accumulating various estimation values estimated in each OFDM symbol through combination has been used. However, such a scheme does not exhibit a high performance improvement effect even though the estimation values are accumulated as described above, the estimation values must be accumulated over multiple OFDM symbols.

In the conventional maximum likelihood frequency offset estimation scheme, since a channel is regarded as a fixed value and thus a case in which a movable body moves is not considered, the frequency offset estimation performance deteriorates as the speed of the movable body increases. Further, when a frequency offset is estimated by means of only a CP in an OFDM system, the frequency offset estimation performance degrades due to the short length of the CP and the estimation values must be combined over multiple OFDM symbols. YI MA ET AL: "Combined Channel Estimator for Pilot-Assisted Wireless OFDM Communication Systems", 17 May 2004 relates to a combined channel estimator for pilot-assisted wireless OFDM communication systems. Combined channel estimators are proposed for pilot-tone assisted OFDM systems, firstly a double maximum likelihood method, and secondly a second-order polynomial model (SOPM). Inverse fourier transforms are employed to generate the OFDM symbols with symbol duration T. In the receiving end, the received baseband signal is sampled. The samples in the guard interval are removed from the discrete signal Y. Assuming that the channel remains constant within one OFDM symbol, the discrete fourier transform results of Y is calculated. The second-order polynomial is employed to model the channel transfer function within a given block. A polynomial interpolation is required to estimate the transfer function in the data area. The major advantage of the second order polynomial model approach is that the channel estimation performance within a block is not related to the channel length.

Accordingly, the present invention has been made to solve at least the above-mentioned problems occurring in the prior art.

It is the object of the present invention to provide a frequency offset estimation method using a polynomial model in a mobile communication system of a fast Rayleigh fading channel environment.

This object is solved by the subject matter of the independent claims.

Preferred embodiments are defined in the dependent claims.

It is an aspect of the present invention to provide a frequency offset estimation algorithm through linear modeling or polynomial modeling, which improves a general maximum likelihood frequency offset estimation scheme in an OFDM mobile communication system, thereby enabling the mobile communication system to have a constant estimation performance against the change in the speed of a movable body under a fast fading channel environment in which a channel abruptly changes with time.

It is a further aspect of the present invention to provide a frequency offset estimation algorithm which enables a constant estimation performance to be maintained even under a fast fading channel that changes over time by applying a linear model or a polynomial model to a channel, applying a joint maximum likelihood condition to the channel, and estimating a frequency offset.

In accordance with one aspect of the present invention, there is provided a method for estimating a frequency offset in a mobile communication system that divides a predetermined frequency band by a time division scheme to transmit data signals or divides an entire frequency band into a plurality of sub-frequency bands to transmit the data signals, the method includes the steps of modeling a fast fading channel by one of a linear equation and a polynomial equation is expressed as a sum of a constant term and a term having a specific order of degree which changes with a constant slope over time; appearing a vector for the channel after performing the modeling, and estimating the polynomial modeling matrix based on a joint maximum likelihood; and estimating frequency offset using a training sequence and the polynomial modeling matrix.

In accordance with another aspect of the present invention, there is provided a maximum likelihood estimation method using a polynomial model in a mobile communication system of a fast Rayleigh fading channel environment, the method includes the steps of receiving a training sequence, forming a first cyclic shifted matrix from the training sequence, and forming a second matrix from the first matrix through a polynomial modeling; calculating a projection matrix B from the second matrix and calculating a weighted correlation coefficient by means of a $(k-m, k)^{th}$ element of the projection matrix; and performing a fast fourier transform (FFT) for the calculated weighted correlation coefficient used to calculate values on a frequency domain, and selecting and outputting a position providing a largest value from among the calculated values.

The above object and other aspects, features and advantages of the present invention will be more apparent from the following detailed description taken in conjunction with the accompanying drawings, in which:

FIG. 1 is a block diagram illustrating a general frequency offset estimation process in a communication system;

FIG. 2 is a graph showing a general example of a fast Rayleigh fading channel;

FIG. 3 illustrates a construction of a maximum likelihood estimator according to the prior art;

FIG. 4 is a graph showing an example of a Rayleigh fading channel approximating to a linearity according to an embodiment of the present invention;

FIG. 5 is a block diagram showing the structure of a maximum likelihood estimator using a polynomial model in a mobile communication system in a fast Rayleigh fading channel environment according to an embodiment of the present invention; and

FIG. 6 is a graph illustrating performance based on a maximum likelihood frequency offset estimation using a polynomial model according to the present invention.

Hereinafter, a preferred embodiment according to the present invention will be described with reference to the accompanying drawings. In the following description of the present invention, a detailed description of known functions and configuration incorporated herein will be omitted when it may make the subject matter of the present invention rather unclear.

The present invention relates to a method for estimating a frequency offset using a polynomial model under a fast Rayleigh fading channel ('fast fading channel'). In particular, the present invention proposes a frequency offset estimation algorithm which improves a general maximum likelihood frequency offset estimation scheme in a mobile communication system employing a TDMA, an OFDM, etc., thereby enabling the system to have a constant estimation performance against the change in the speed of a movable body even under a fast fading channel in which a channel abruptly changes over time.

Further, the present invention includes processes of employing a polynomial model for a channel, applying a joint maximum likelihood condition to the polynomial model, and estimating a frequency offset.

First, a polynomial modeling of a channel will be described.

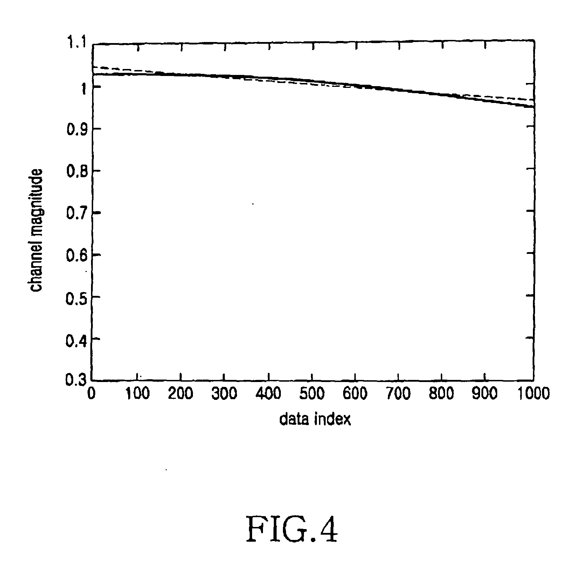

In the present invention, a fast fading channel is modeled by a linear equation or a polynomial equation. For instance, when a channel is modeled by a linear equation, the channel is expressed as the sum of a constant term and a linear term which changes with a constant slope over time. Time is expressed by an index according to a sequence in which data is transmitted. The Rayleigh fading channel will be described with reference to FIG. 4.

FIG. 4 is a graph showing an example of the Rayleigh fading channel approximating to a linearity according to an embodiment of the present invention. First, the solid line shown in FIG 4 denotes an actual channel and the dotted line shown in FIG. 4 denotes the channel modeled by the linear equation according to the present invention.

FIG. 4 shows only a portion in which a data index corresponds to a range of 1 to 1000 in the channel of FIG. 2 as described above. When a data transmission interval corresponds to the data index range of 1 to 1000 as described above, the channels of FIG. 4 cannot be regarded as a time-invariant channel having a constant value because they change considerably over time. Instead, the channels are regarded as fast fading channels changing over time. Since the channels are not rapidly changing as the channel shown in FIG. 2, the channels of FIG. 4 may be expressed by a linear equation or a low order polynomial equation. In FIG. 4, when the change is expressed by a first order polynomial equation, a slight error may occur but the first order polynomial equation may generally express the channel. Further, a modeling of higher order may be accomplished in the same manner as described above. When a channel is modeled by a polynomial equation, a modeling error decreases as the order of the polynomial equation increases.

In a case of a frequency selective channel having L multiple paths, a term of each order is expressed by a vector having a length of L. In the maximum likelihood estimator according to the prior art of FIG. 3, it is assumed that a channel does not change during a data transmission interval. Such a case corresponds to a case in which only a constant term exists in a polynomial modeling. The reason for modeling the channel by the polynomial equation is because it is possible to fit the channel with the polynomial equation according to the degree of change of the channel when the channel changes by a fast Rayleigh fading for a predetermined interval. When the channel slightly changes, an error occurring from a modeling is small even though the channel is fitted with a linear equation, which does not largely influence estimation performance. Since the channel is modeled by the linear equation, the number of variables necessary for the modeling is twice as many as those in the prior art. Further, even when the channel is modeled by an equation of a higher order than a quadratic equation, the number of variables necessary for the modeling increases in proportion to the order of the equation.

A polynomial model-based joint maximum likelihood estimator will be described.

The channel modeled by the polynomial equation and the frequency offset regarded as a fixed value are estimated in view of a joint maximum likelihood. A joint maximum likelihood estimation method used herein is the same as that of the prior art and a channel part is replaced with the aforementioned polynomial model. Further, since the number of variables increases in the channel part, a constant term, an estimated value of channel coefficients of a linear term, and an estimated value of a frequency offset are obtained as an estimation result. When the scheme of the prior art is applied to a fast Rayleigh fading channel, an error caused by not considering a channel change frequently occurs as compared with an error caused by noise. Therefore, performance deterioration occurs. In contrast, the estimator proposed in the present invention includes many variables as compared with the estimator of the prior art. However, the estimator of the present invention is less sensitive to a channel change due to its linearity (i.e., linear term) or a polynomial channel. Therefore, an error occurring from the channel can be reduced. Further, estimation performance is not greatly deteriorated due to offset of the above two effects even though the speed of a movable body increases.

A preferred embodiment of the present invention, an operation principle of the aforementioned estimation process will be described in detail.

A signal transmitted through a channel may be expressed by the following Equation 1.

$$x(n) = e^{j2\pi n \varepsilon} s(n) + w(n), n = 0, \cdots, N - 1 \quad \dots\dots\dots\dots\dots\dots\dots\dots\dots\dots\dots (1)$$

In Equation 1, x(n) denotes the signal received through the channel, $\varepsilon$ denotes a frequency offset and w(n) denotes an additive white Gaussian noise ('AWGN'). Herein, s(n) may be expressed by the following Equation 2.

$$s(n) = \sum_{k=0}^{L-1} h_n(k) a_{n-k}, n = 0, \cdots, N - 1 \quad \dots\dots\dots\dots\dots\dots\dots\dots\dots\dots (2)$$

In Equation 2, s(n) denotes a value expressed by convolution of a transmission signal an and a channel $h_n(k)$, k=0,...,L-1. Herein, $h_n(k)$ denotes a channel changing over time n. When the channel has a constant value regardless of the time n, the joint maximum likelihood estimator in the prior art is induced. In the present invention, $h_n(k)$ is expressed by a polynomial equation, that is, the following Equation 3.

$$h_n(k) = h_0 + k h_1 + k^2 h_2 + \cdots + k^M h_M \quad \dots\dots\dots\dots\dots\dots\dots\dots\dots (3)$$

In Equation 3, $h_n(k)$ is modeled by the polynomial equation as shown in Equation 3, is put into the Equation 2, and is then expressed by a vector as the following Equation 4.

$$x = \Gamma(\varepsilon)\left(A h_0 + DA h_1 + D^2 A h_2 + \cdots + D^M A h_M\right) + w \quad \dots\dots\dots\dots\dots\dots (4)$$

In Equation 4, definition for each vector and matrix is as follows. That is, x is a received signal vector and defined as x=[x(0), x(1),..., x(N-1)$^T$], w is a noise vector and defined as w=[w(0), w(1),..., w(N-1)$^T$], frequency offset matrix $\Gamma(\varepsilon)$ is defined as diag{1, $e^{j2\pi n\varepsilon}$, $e^{j4\pi n\varepsilon}$,..., $e^{j2\pi(N-1)\varepsilon}$}, and D is an interpolation constant matrix and defined as diag {1, 2,..., N-1}.

The matrix A is defined as an N x L matrix having a cyclic-shift characteristic in order to express a convolution type. This may be expressed by the following Equation 5.

$$[A]_{i,j} = a_{i-j}, \ 0 \le i \le N - 1, \ 0 \le j \le L - 1 \quad \dots\dots\dots\dots\dots\dots\dots\dots (5)$$

In Equation 5, it is not always necessary to model the channel by a polynomial equation of M$^{th}$ order. Since a model in the first order of degree, that is, a linear model, has a good estimation performance according to the result cited in the present invention, algorithms applied to the linear model will be described hereinafter. The received vector x expressed by the linear model may be expressed by the following Equation 6.

$$x = \Gamma(\varepsilon)\left(A h_0 + DA h_1\right) + w \quad \dots\dots\dots\dots\dots\dots\dots\dots\dots (6)$$

Herein, Equation 6 may be briefly expressed by the following Equation 7.

$$x = \Gamma(\varepsilon)[A \quad DA]\begin{bmatrix} h_0 \\ h_1 \end{bmatrix} + w = \Gamma(\varepsilon)Ch_t \quad \dots\dots\dots\dots\dots\dots\dots (7)$$

In Equation 7, C=[A DA] denotes a matrix including transmission data and $h_t = [h_0^T \quad h_1^T]^T$ denotes including channel coefficients.

A likelihood function for the variables $\varepsilon$ and $h_t$ may be expressed by the following Equation 8 on the basis of a reception model as described above.

$$\Lambda\left(x; \tilde{h}_t, \tilde{\varepsilon}\right) = \frac{1}{\left(\pi\sigma_n^2\right)^N} \cdot \exp\left\{ -\frac{1}{\sigma_n^2}[x - \Gamma\left(\tilde{\varepsilon}\right)C\tilde{h}_t]^H [x - \Gamma\left(\tilde{\varepsilon}\right)C\tilde{h}_t] \right\} \quad \dots\dots\dots (8)$$

Herein, when a joint maximum likelihood estimation method maximizing the likelihood function, that is, Equation 8, is applied, the following Equation 9 is obtained.

$$\tilde{h}\left(\tilde{\varepsilon}\right) = \left(C^H C\right)^{-1} C^H \Gamma^H\left(\tilde{\varepsilon}\right)x$$
$$g\left(\tilde{\varepsilon}\right) = x^H \Gamma\left(\tilde{\varepsilon}\right)C\Gamma^H\left(\tilde{\varepsilon}\right)x \quad \dots\dots\dots\dots\dots\dots\dots\dots (9)$$

Processes for calculating the two solutions obtained in Equation 9 and types of the two solutions are equal to those in the prior art. However, a system model equation has changed by the aforementioned polynomial modeling and the matrix C contained in the result of the solution replaces the matrix A in the prior art.

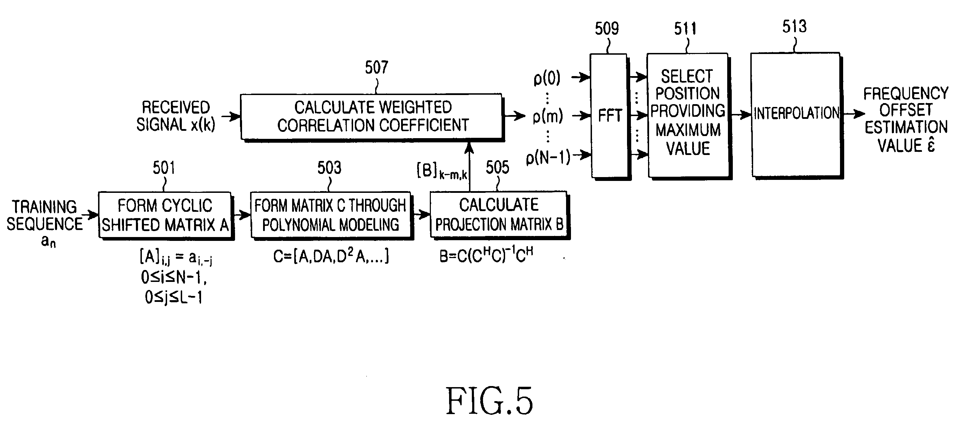

The structure of a frequency offset estimator obtained from the result of the algorithm will be described with reference to FIG. 5.

FIG. 5 is a block diagram showing the structure of a maximum likelihood estimator using a polynomial model in a mobile communication system of a fast Rayleigh fading channel environment according to an embodiment of the present invention.

FIG. 5 shows the structure of the maximum likelihood estimator according to the present invention. The maximum likelihood estimator inputs a training sequence as Then, in block 501, a cyclic shifted matrix A is formed from the input training sequence an. In block 503, a matrix C is formed from the matrix A through a polynomial modeling. In block 505, a projection matrix B is calculated from the matrix C. Herein, a (k-m, k)th element of the projection matrix B is used in calculating a weighted correlation coefficient of data in block 507.

Next, the weighted correlation coefficient calculated in block 507 is subjected to an FFT in block 509 so as to calculate values on a frequency domain. In block 511, a position providing the largest value from among the calculated values is selected. Herein, a frequency value at the selected position equals the estimated value of a frequency offset. Further, as a window size of an FFT increases, a value near to a frequency offset of an exact position can be estimated, and interpolation is used for more exact estimation in block 513.

The maximum likelihood estimator of FIG. 5 has a structure similar to that of FIG. 3. However, a weighted value used in calculating the correlation coefficient is differently expressed. That is, the matrix B providing the weighted value is obtained from the matrix C (C=[A, DA]) instead of the matrix A.

The frequency offset to be estimated in the present invention can be obtained by determining the factor $\tilde{\varepsilon}$($\tilde{\varepsilon}$ = arg max$_{\tilde{\varepsilon}}\{g(\tilde{\varepsilon})\}$) maximizing the $g(\tilde{\varepsilon})$ in the equation. Actually, a process of determining such a factor can be performed through an FFT and this process is the same as that of the prior art.

A change of a current channel can be obtained by the linear model from the result for the channel in the equation. However, since the channel changes during each data interval, the change is meaningless in the next interval. Further, since a frequency offset does not change greatly over time, a value obtained in a current interval is valid even in the next interval.

A comparison of the frequency offset estimation method proposed in the present invention and the estimation method of the prior art will be described with reference to FIG. 6.

FIG. 6 is a graph illustrating the performance based on a maximum likelihood frequency offset estimation using a polynomial model according to the present invention.

An experimental environment of FIG. 6 employs an OFDM system. Further, the detailed items are as follows: the number N of sub-channels is 1024, a CP length (Ncp) is 128, the length L of a channel is 128 (exponential weight), a carrier frequency is 5.8 GHz, a sampling rate is 5.7 MHz, a signal-to-noise ratio (SNR) is 20 dB, and a mobile speed is 0~250 km/h (0-0.25 in a normalized Doppler frequency standard).

FIG. 6 shows a result obtained by comparing the frequency offset estimation values of the prior art and the present invention from standpoint of a mean square error (MSE). In FIG. 6, it is assumed that the speed of a movable body changes from 0 to about 250 km/h. As shown in FIG. 6, in the performance of the prior art, the MSE exhibits about $10^{-12}$ when the speed approximates to 0 km/h. However, as the speed of the movable body gradually increases, the MSE rapidly increases. Further, when the speed of the movable body is about 50 km/h, the MSE exhibits performance of about $10^{-9}$. That is, in the prior art, as the speed of the movable body increases, the MSE gradually increases. In contrast, the estimator proposed in the present invention generally exhibits performance of about $10^{-10}$ in all intervals. Further, as the speed of the movable body increases, the MSE gradually increases. However, the estimator according to the present invention maintains a performance lower than the estimator according to the prior art.

As described above, according to a maximum likelihood frequency offset estimation apparatus and method of the present invention, which is based on a polynomial model for a mobile communication system of a fast Rayleigh fading channel environment, a polynomial model, particularly, a linear model-based joint maximum likelihood estimation method is applied in estimating a frequency offset of the mobile communication system experiencing a fast Rayleigh fading channel. Therefore, estimation performance is not relatively influenced by the speed of a movable body from standpoint of an MSE. Accordingly, a estimation performance above at least a predetermined level can be obtained.

Further, when an algorithm of the present invention is applied to an OFDM system, a scheme proposed in the present invention uses an OFDM symbol as a training sequence, so that offset estimation can be performed in a short time, as compared with the conventional scheme in which offset estimation must be performed for plural OFDM symbols using a CP.

Although a preferred embodiment of the present invention has been described for illustrative purposes, those skilled in the art will appreciate that various modifications, additions and substitutions are possible, without departing from the scope of the invention as disclosed in the accompanying claims.

**Claims**

1. A method for estimating a frequency offset in a mobile communication system that divides a predetermined frequency band by a time division scheme to transmit data signals or divides an entire frequency band into a plurality of sub-frequency bands to transmit the data signals, the method comprising the steps of:

   modelling a fast fading channel by one of a linear equation or a polynomial equation; whereby said modelling is expressed as a sum of a constant term and a term having a specific order which changes with a constant slope over time;
   expressing a vector for the channel after performing the modeling and calculating a polynomial modeling matrix based on a joint maximum likelihood method; and
   estimating the frequency offset using a training sequence and the polynomial modelling matrix.

2. The method as claimed in claim 1, wherein estimating the frequency offset comprises:

   forming a first cyclic shifted matrix from the training sequence;
   forming a second matrix from the first matrix through a polynomial modeling;
   calculating a third projection matrix from the second matrix;
   calculating a weighted correlation coefficient by means of an element of the third matrix; and
   performing a fast fourier transform, FFT, for the calculated weighted correlation coefficient used to calculate values on a frequency domain, and selecting and outputting a position providing a largest value from among the calculated values.

3. The method as claimed in claim 2, wherein the frequency value at the selected position includes an estimated value of a frequency offset.

4. The method as claimed in one of claims 2 or 3, further comprising a step of performing an interpolation for more exact estimation after the position is selected.

5. The method as claimed in claim 1, wherein time is an index according to a sequence in time within which data is transmitted.

6. The method as claimed in claim 1, wherein, in the modelling, a term of each order is expressed by a vector having a length of L in a frequency selective channel having L multiple paths.

7. The method as claimed in claim 1, wherein the polynomial modeling fits the channel on the polynomial equation according to degree of change of the channel when the channel changes in response to a fast Rayleigh fading in a predetermined data transmission interval.

8. The method as claimed in one of claims 1 to 5, wherein the maximum likelihood estimation estimates the channel modeled by the polynomial equation and a frequency offset regarded as a fixed value from standpoint of the joint maximum likelihood.

9. The method as claimed in one of claims 1 to 8, wherein the channel is the polynomial equation and is defined as $h_n(k) = h_0 + kh_1 + k^2 h_2 + \cdots + k^M h_M$.

10. The method as claimed in claim 9, wherein, a vector obtained by modelling the channel $h_n(k)$ by means of the polynomial equation, the is defined as

$$x = \Gamma(\varepsilon)\left(Ah_0 + DAh_1 + D^2 Ah_2 + \cdots + D^M Ah_M\right) + w,$$

where x is a received signal vector and defined as x=[x(0), x(1),..., x(N-1)$^T$], w is a noise vector and defined as w= [w(0), w(1),..., w(N-1)$^T$], $\Gamma(\varepsilon)$ is a frequency offset matrix and defined as diag{1, $e^{j2\pi n\varepsilon}$, $e^{j4\pi n\varepsilon}$ ,..., $e^{j2\pi(N-1)\varepsilon}$}, D is a interpolation constant matrix and defined as diag{1, 2,..., N-1}, and A is a matrix and defined as an N x L matrix having a cyclic-shift characteristic in order to express a convolution type.

11. The method as claimed in claim 8, wherein the received vector is defined as

$$x = \Gamma(\varepsilon)\left(Ah_0 + DAh_1\right) + w \text{ and } x = \Gamma(\varepsilon)[A \quad DA]\begin{bmatrix} h_0 \\ h_1 \end{bmatrix} + w = \Gamma(\varepsilon)Ch_t,$$

where C=[A DA] denotes a matrix including transmission data and $h_t = [h_0^T \quad h_1^T]^T$ denotes including channel coefficients.

**Patentansprüche**

1. Verfahren für das Schätzen eines Frequenzversatzes (frequency offset) in einem mobilen Kommunikationssystem, welches ein vorbestimmtes Frequenzband durch ein Zeitmultiplex-Schema einteilt, um Datensignale zu übertragen oder ein gesamtes Frequenzband in eine Vielzahl von Unterfrequenzbändem einteilt, um die Datensignale zu übertragen, wobei das Verfahren die Schritte umfasst:

   Modellieren eines Fast Fading Kanals durch eine lineare Gleichung oder eine Polynomial-Gleichung; wobei besagtes Modellieren durch eine Summe eines konstanten Terms und eines Terms, welcher eine bestimmte Ordnung aufweist, welcher sich mit einer konstanten Steigung mit der Zeit ändert, ausgedrückt wird; Ausdrücken eines Vektors für den Kanal nach dem Durchführen des Modellierens und Berechnen einer polynomialen Modellierungs-Matrix basierend auf einem Verfahren für ein Verbund-Maximum-Likelihood (joint maximum likelihood Verfahren); und Schätzen des Frequenzversatzes unter Benutzung einer Trainingssequenz und der polynomialen Modellierungs-Matrix.

2. Verfahren gemäß Anspruchs 1, wobei das Schätzen des Frequenzversatzes umfasst:

Bilden einer ersten zyklisch verschobenen Matrix aus der Trainingssequenz;
Bilden einer zweiten Matrix aus der ersten Matrix durch polynomiales Modellieren;
Berechnen einer dritten Projektions-Matrix aus der zweiten Matrix;
Berechnen eines gewichteten Korrelationskoeffizienten mittels eines Elementes der dritten Matrix; und
Durchführen einer Fast Fourier Transformation, FFT, für den berechneten gewichteten Korrelationskoeffizienten, welche benutzt wird um Werte im Frequenzbereich zu berechnen, und Auswählen und Ausgeben einer Position, welche den größten Wert der berechneten Werte bereitstellt.

3.  Verfahren gemäß Anspruchs 2, wobei der Frequenzwert an der ausgewählten Position einen Schätzwert eines Frequenzversatzes umfasst.

4.  Verfahren gemäß einem der Ansprüche 2 oder 3, des weiteren beinhaltend einen Schritt des Durchführens einer Interpolation für eine exaktere Schätzung, nach dem die Position ausgewählt wurde.

5.  Verfahren gemäß Anspruchs 1, wobei die Zeit ein Index ist gemäß einer zeitlichen Reihenfolge in welcher Datenübertragen werden.

6.  Verfahren gemäß Anspruch 1, wobei bei dem Modellieren ein Term jeder Ordnung durch einen Vektor der Länge L in einem frequenzselektiven Kanal, welcher L Pfade aufweist, ausgedrückt wird.

7.  Verfahren gemäß Anspruch 1, wobei das polynomiale Modellieren den Kanal an die polynomiale Gleichung gemäß dem Grad der Änderung des Kanals anpasst, wenn sich der Kanal in Erwiderung auf ein schnelles Rayleigh Fading in einem vorbestimmten Datenübertragungs-Intervall ändert.

8.  Verfahren gemäß einem der Ansprüche 1 bis 5, wobei die Maximum-Likelihood Schätzung den Kanal, welcher durch die polynomiale Gleichung und einen Frequenzversatz, welcher als ein fester Wert vom Standpunkt des Verbund-Maximum-Likelihood betrachtet wird, modelliert wird, schätzt.

9.  Verfahren gemäß einem der Ansprüche 1 bis 8, wobei der Kanal die polynomiale Gleichung ist und definiert ist als $h_n(k) = h_0 + kh_1 + k^2h_2 + \cdots + k^M h_M$.

10. Verfahren gemäß Anspruch 9, wobei ein Vektor, welcher durch das Modellieren des Kanals $h_nk$ mittels der polynomialen Gleichung erhalten wird, definiert ist als

$$x = \Gamma(\varepsilon)\left(Ah_0 + DAh_1 + D^2 Ah_2 + \cdots + D^M Ah_M\right) + w \,,$$

wobei x ein empfangener Signalvektor ist und definiert ist als $x=[x(0), x(1),..., x(N-1)^T]$, w ein Rauschvektor ist und definiert ist als $w=[w(0), x(1),...,(N-1)^T]$, $\Gamma(\varepsilon)$ eine Frequenzversatzmatrix ist und definiert ist als Diag $\{1, e^{j2\pi n\varepsilon}, e^{j4\pi n\varepsilon},..., e^{j2\pi(N-1)\varepsilon}\}$, D eine Interpolationskonstanten-Matrix ist und definiert ist als Diag $\{1,2,...,N-1\}$, und A eine Matrix ist, welche definiert ist als eine N x L Matrix, welche eine zyklische Verschiebungscharakteristik aufweist, um einen Konvolutionstyp auszudrücken.

11. Verfahren gemäß Anspruch 8, wobei der empfangene Vektor definiert ist als

$$x = \Gamma(\varepsilon)\left(Ah_0 + DAh_1\right) + w \text{ und } x = (\varepsilon)[A \quad DA]\begin{bmatrix} h_0 \\ h_1 \end{bmatrix} + w = \Gamma(\varepsilon)Ch_t \,,$$

wobei C=[A DA] eine Matrix bezeichnet, welche die Übertragungsdaten umfasst und $h_t = [h_0^T \quad h_1^T]^T$ die Kanalkoeffizienten bezeichnet.

**Revendications**

1. Procédé d'estimation d'un décalage de fréquence dans un système de communication mobile qui divise une bande de fréquences prédéterminée à l'aide d'un mécanisme de répartition dans le temps afin de transmettre des signaux de données ou qui divise une bande entière de fréquences en une pluralité de bandes de sous-fréquences pour transmettre les signaux de données, le procédé comprenant les étapes consistant à :

   modéliser un canal à évanouissement rapide à l'aide de soit une équation linéaire, soit une équation polynomiale, ladite modélisation étant exprimée comme la somme d'un terme constant et d'un terme ayant un ordre spécifique qui change avec une pente constante dans le temps ;
   exprimer un vecteur pour le canal après avoir effectué la modélisation et calculer une matrice de modélisation polynomiale fondée sur un procédé de maximum de vraisemblance conjoint ; et
   estimer le décalage de fréquence en utilisant une séquence d'apprentissage et la matrice de modélisation polynomiale.

2. Procédé selon la revendication 1, dans lequel l'estimation du décalage de fréquence comprend les étapes consistant à :

   former à partir de la séquence d'apprentissage une première matrice décalée cycliquement ;
   former à partir de la première matrice une deuxième matrice par une modélisation polynomiale ;
   calculer à partir de la deuxième matrice une troisième matrice de projection ;
   calculer un coefficient de corrélation pondéré à l'aide d'un élément de la troisième matrice ; et
   exécuter une transformation de Fourier rapide, le coefficient de corrélation pondéré qui a été calculé étant utilisé pour calculer des valeurs dans un domaine fréquentiel, et sélectionner et fournir en sortie une position fournissant une valeur maximale parmi les valeurs calculées.

3. Procédé selon la revendication 2, dans lequel la valeur de fréquence, dans la position sélectionnée, comprend une valeur estimée d'un décalage de fréquence.

4. Procédé selon l'une des revendications 2 et 3, comprenant en outre une étape consistant à exécuter une interpolation pour obtenir une estimation plus exacte, après que la position a été sélectionnée.

5. Procédé selon la revendication 1, dans lequel le temps est un index dans une séquence temporelle au cours de laquelle des données sont transmises.

6. Procédé selon la revendication 1, dans lequel, dans la modélisation, un terme de chaque ordre est exprimé par un vecteur de longueur L dans un canal sélectif en fréquence ayant L trajets multiples.

7. Procédé selon la revendication 1, dans lequel la modélisation polynomiale ajuste le canal sur l'équation polynomiale en fonction du degré de changement du canal, lorsque le canal change en réponse à un évanouissement de Rayleigh rapide sur un intervalle prédéterminé de transmission de données.

8. Procédé selon l'une des revendications 1 à 5, dans lequel l'estimation à maximum de vraisemblance estime le canal modélisé par l'équation polynomiale et un décalage de fréquence considéré comme une valeur fixe du point de vue du maximum de vraisemblance conjoint.

9. Procédé selon l'une des revendications 1 à 8, dans lequel le canal est l'équation polynomiale et se définit comme

$$h_n(k) = h_0 + kh_1 + k^2 h_2 + \cdots + k^M h_M.$$

10. Procédé selon la revendication 9, dans lequel un vecteur obtenu par modélisation du canal $h_n(k)$ à l'aide de l'équation polynomiale est défini comme

$$x = \Gamma(\varepsilon)\left(Ah_0 + DAh_1 + D^2 Ah_2 + \cdots + D^M Ah_M\right) + w.$$

où x est un vecteur de signal reçu qui se définit comme $x = [x(0), x(1), ..., x(N-1)^T]$, w est un vecteur de bruit défini comme $w = [w(0), w(1), ..., w(N-1)^T]$, $\Gamma(\varepsilon)$ est une matrice de décalages de fréquence définie comme

$$\text{diag}\{1,\ e^{j2\pi\varepsilon},\ e^{j4\pi\varepsilon},...,\ e^{j2\pi(N-1)\varepsilon}\},$$

D est une matrice de constantes d'interpolation définie comme $\text{diag}\{1, 2, ..., N-1\}$ et A est une matrice définie comme une matrice N x L ayant une caractéristique de décalage cyclique afin d'exprimer un type de convolution.

11. Procédé selon la revendication 8, dans lequel le vecteur reçu est défini comme

$$x = \Gamma(\varepsilon)(Ah_0 + DAh_1) + w \text{ and } x = \Gamma(\varepsilon)[A \quad DA]\begin{bmatrix} h_0 \\ h_1 \end{bmatrix} + w = \Gamma(\varepsilon)Ch_i,$$

où $C = [A \; DA]$ désigne une matrice comprenant des données transmises et $h_i = [h_0^T \; h_1^T]^T$ désigne l'inclusion de coefficients de canaux.

FIG.1

FIG.2

RECEIVED
SIGNAL x(k) →

305

CALCULATE WEIGHTED
CORRELATION COEFFICIENT

$\rho(0)$ →
$\vdots$
$\rho(m)$ →
$\vdots$
$\rho(N-1)$ →

307

FFT

309

SELECT
POSITION
PROVIDING
MAXIMUM
VALUE

311

INTERPOLATION

FREQUENCY
OFFSET
ESTIMATION
VALUE $\hat{\epsilon}$

TRAINING
SEQUENCE
$a_n$ →

301

FORM CYCLIC
SHIFTED MATRIX A

$[A]_{i,j} = a_{i,-j}$
$0 \le i \le N-1$,
$0 \le j \le L-1$

$[B]_{k-m,k}$

303

CALCULATE
PROJECTION MATRIX B

$B = A(A^H A)^{-1} A^H$

FIG.3

EP 1 619 846 B1

FIG.4

$$\text{FIG.5}$$

**FFT** (509), **SELECT POSITION PROVIDING MAXIMUM VALUE** (511), **INTERPOLATION** (513)

**CALCULATE WEIGHTED CORRELATION COEFFICIENT** (507)

RECEIVED SIGNAL x(k)

$\rho(0)$, $\rho(m)$, $\rho(N-1)$

FREQUENCY OFFSET ESTIMATION VALUE $\hat{\varepsilon}$

TRAINING SEQUENCE $a_n$

**FORM CYCLIC SHIFTED MATRIX A** (501)
$[A]_{i,j} = a_{i,-j}$
$0 \le i \le N-1$,
$0 \le j \le L-1$

**FORM MATRIX C THROUGH POLYNOMIAL MODELING** (503)
$C=[A, DA, D^2 A, \ldots]$

**CALCULATE PROJECTION MATRIX B** (505)
$[B]_{k-m,k}$
$B = C(C^H C)^{-1} C^H$

EP 1 619 846 B1

FIG.6